# EUROPEAN PATENT APPLICATION

(11) **EP 4 847 219 A1**
(43) Date of publication of application: **02.12.2026**
(21) Application number: 25179380.8
(22) Date of filing: 28.05.2025
(51) Int. Cl.: B27K 3/15, C08G 61/12, C08G 65/36, C08J 3/24, C08L 65/00, C08L 71/14, C08L 99/00

(54) **POLYMERIZABLE COMPOSITION COMPRISING FURFURYL ALCOHOL AND WATER-SOLUBLE HUMINS, ITS USE AS WOOD MODIFYING AGENT AND METHOD OF MODIFYING WOOD**

(71) Applicant: Kebony AS, 3739 Skien (NO)
(72) Inventor: Lie, Aleksander, 3713 Skien (NO); Aabø, Dessi, 3714 Skien (NO)
(74) Representative: Acapo Onsagers AS

(57) **Abstract**

The present invention relates to a polymerizable composition comprising watersoluble humins, furfuryl alcohol, a difunctional cross-linker and an acidic polymerization initiator, as well as a method of modifying wood and the composition's use as a wood modifying agent.

## Description

### FIELD OF THE INVENTION

The present invention relates to a polymerizable composition comprising water-soluble humins, furfuryl alcohol and an acidic polymerization initiator, as well as a method of modifying wood and the composition's use as a wood modifying agent.

### INTRODUCTION

Furan polymer impregnated wood is known in the art. Furan polymer impregnated wood is generally produced by application/impregnation of the wood with a suitable amount of a polymerizable solution/liquid, and thereafter heating and curing the wood such that the polymerizable compounds of the polymerizable solution are polymerized/cured into a furan polymer in the wood cells.

The wood impregnation industry is in a continuous need for further environmentally friendly wood modification solution that is cheaper than existing solutions, easy to produce and exhibiting improved leaching properties compared to existing wood modification compositions, such as the use of pure furfuryl alcohol in wood impregnation. The polymerizable solution typically comprises low molecular furan derivatives, e.g. furfural, furfuryl alcohol, bishydroxy methylfuran or combinations thereof, and optionally catalysts, initiators and stabilizers.

Research and Development of furan polymer impregnated wood relate to both improvements of the components of the polymerizable solutions and improvements relating to the process of impregnation. Early publications relate e.g. to improvements of the polymerizable composition: A non-separating mixture with enhanced affinity for wood is known from WO 02/30638.

Humins were used in polymerizable compositions together with furfuryl alcohol (FA) for wood modifications. Humins are biomass-derived materials that emerge as co-products during the acid-catalyzed conversion of carbohydrates, cellulose, and hemicellulose into platform chemicals. These substances are complex, heterogeneous, and polydisperse macromolecules, primarily composed of furanic rings and functionalized with aldehydes, ketones, and hydroxyl groups. Due to their structural similarities to poly(furfuryl alcohol) (PFA), humins present a promising alternative to FA for wood modification-provided they can penetrate the wood cell walls despite being oligomeric, unlike the monomeric FA. With the increasing industrial focus on green chemistry and sustainable biomass utilization, the valorization of humins is gaining significant attention.

An example, where FA, humins and an acidic polymerization initiator may be used for impregnating wood, is U.S. Pat. No. 3,293,200. However, humins as described therein are water-insoluble solid residues that are viscous in water and requires an alcohol as a solvent and a strong acid such as para-toluene sulfonic acid (pTSA) as a catalyst. Low pH degrades wood which results in non-homogenous impregnation of wood and low mechanical strength of the finished samples.

Sangregorio, A. et al., "Humin based resin for wood modification and property improvements", Green Chemistry, 2020, vol 22, pp. 2786-2798 discloses one method of obtaining a water-soluble fraction of humins and suggest impregnating wood water-soluble fraction of humins as an alternative solution to FA. However, the use of water soluble humins alone for impregnating wood is not as effective as use of a polymerizable FA.

There is a need for further improving polymerizable compositions constituted by FA and humins. Key properties in general relate to environmental issues, ease of processibility (i.e. handling of the composition), and improved properties implied to the impregnated wood. Further, there is a need for compositions showing improved storage stability: After being activated (if needed) and being ready for treatment, it is important that the treating solution is chemically stable for at least 3 weeks at ambient temperature. The treating solution should be usable after three weeks, with only minimal stirring needed prior to impregnation. It is important that the solution is homogenous or a stable suspension. Further, the polymerizable composition should provide an increased performance of the impregnated wood: An increased reactivity during curing is required. Heating/drying/curing should be performable at temperatures up to 150 °C with time and temperature controlled. Cycles typically last for 10-100 hours. The polymerizable compositions should provide properties satisfying such typical parameters of impregnation of wood. If the temperature and the curing/heating time is kept on a low level, the wood fibres are not detrimentally affected.

The invention's underlaying problem relates to the provision of a polymerizable composition providing the above need and solving the above-mentioned problems. In particular, the polymerizable composition should provide improved and long-lasting leaching properties to wooden fibres after treatment with the composition.

### SUMMARY OF THE INVENTION

The present inventors have solved the above-mentioned need by providing in **a first aspect** a polymerizable composition according to claim 1, which polymerizable composition comprises a furfuryl alcohol, an acidic polymerization initiator, difunctional cross-linker, and water-soluble humins.

It has surprisingly been found that a polymerizable composition based on the polymerizable components furfuryl alcohol and humins solves the above problems, especially the problem relating to the impregnated wood, when using difunctional crosslinkers. The polymerization initiator is an acidic polymerization initiator. The polymerization composition as a whole imparts beneficial properties to the impregnated wood.

Without being bound to a theory, it seems that the difunctional cross-linker improves the reactivity of the monomeric constituents and/or increases the polymerization rate resulting in a higher proportion of monomers polymerizing rather than evaporating. Indeed, it was surprisingly found that the total amount of polymerizable constituents increase in presence of the difunctional cross-linker. Further, the difunctional cross-linker has an impact on the constitution of the cured product. Even further, the increase in the reactivity of the monomeric constituents allows a decrease of the temperature during curing. The decrease again results in mild treatment of the wood fibres. Thus, there seem to be multiple reasons as to why the difunctional cross-linker has a beneficial impact on the process and on the properties of the impregnated wood.

The term "difunctional cross-linker" is immediately clear for a skilled person. It is a cross-linker having at least two functional groups being able to react with further compounds, in particular polymeric compounds. The at least two functional groups are able to react with two polymeric compounds to connect these two polymeric molecules. It is clear that the cross-linker used in the polymerizable composition of the present invention has at least two functional groups, which means that the cross-linker may have e.g. three functional groups being still a difunctional cross-linker in the sense of the present application having a further functional group.

One essential component of the polymerizable composition is the difunctional cross-linker. In one aspect, the difunctional cross-linker is a dialdehyde, preferably an alkanedial, more preferred a C2- to C6-alkanedial, in particular glyoxal.

Diligent development and optimization using the water-soluble fractionated humins focussed on the difunctional cross-linker. The activator comprises the difunctional cross-linker with glyoxal as one example. Experimental results confirmed wood-impregnation treatment formulations suitable for application in pilot testing. It was surprisingly found that glyoxal as one example is particularly beneficial in view of the performance of the wood subjected to an impregnation with the polymerizable composition.

As for a further essential component, the polymerizable composition comprises water-soluble humins.

In the framework of the present application, humins are understood as heterogenous, polydisperse macromolecules being biomass-derived materials that emerge as co-products during the acid-catalyzed conversion of carbohydrates, cellulose, hemicellulose, and/or hexoses. The term "humins" is well understood by a skilled person although the substance is for example not defined by one single structural formular. Due to the way of obtaining humins, i.e. the feedstock material in the polymerizable composition, the humins comprise furanic rings being functionalized with aldehydes, ketones, and/or hydroxyl groups. It is preferred to understand humins as by-products of the acid-catalyzed conversion of carbohydrates, cellulose, hemicellulose, and/or hexoses, in particular glucose or fructose.

One essential component of the polymerizable composition is represented especially by the humins being water-soluble humins. It has surprisingly been found that the polymerizable composition reveals benefits when the humins used are water soluble humins. These water soluble humins represent a fraction of the humins derived from the above-mentioned acid-catalyzed conversion of carbohydrates, cellulose, hemicellulose, and/or hexoses, in particular glucose and/or fructose. Extensive work on the humins showed that it was possible to fractionate the humins based on solubility properties, to obtain water-soluble fractions with significantly lower average molecular weights and lower dispersity. The transition to the fractionated water-soluble humins provided a solution to the technically beneficial properties.

The water soluble humins as fractionated humins also provided additional benefits: The reactivity increased, allowing for the replacement of the strongly acidic para-toluene sulfonic acid with less acidic activators; and the homogeneity of the modification improved, as observed from microscopic assessment of samples. Combining the water-soluble humins with furfuryl alcohol further increases the reactivity, as shown by significantly decreased weight loss from water leaching. The difunctional cross-linker adds beneficial technical effects to this combination of water-soluble humins with furfuryl alcohol. As will be seen below, there is a steep increase of weight gain in the wood when using the difunctional cross-linker.

In one aspect, the water-soluble humins are produced by the following steps:
- acidic dehydrating of carbohydrates, preferably a lignocellulosic material or a sugar, and thereby obtaining a dehydration product; and
- extracting the water soluble humins from the dehydration product, and thereby obtaining the water-soluble humins.

As described above, humins usually are dark-coloured solid byproducts formed during liquid-phase conversion of lignocellulosic biomass and derivatives such as polysaccharides, sugar, sugar alcohols, fructose, glucose, etc. Typically, the humins are extracted by alcohols from the reaction product of the liquid-phase conversion of lignocellulosic biomass and derivatives. Such obtained humins are highly viscous. For instance, de Jong et al. disclose methods of acidic dehydrating of carbohydrates (de Jong et al.: "The Road to Bring FDCA and PEF to the Market" in Polymer, 2022, 14(5), p. 943 ff., accessible via https://doi.org/10.3390/polym14050943). The article has the major focus on production of other substances than humins via the acidic dehydration of carbohydrates yielding humins as by-product.

Different from the state of the art techniques of extracting the humins by a one-step extraction, in particular by extraction with an alcohol, the water-soluble humins used in the polymerizable composition of the present application are preferably obtained by a two-step extraction: According to a preferred aspect, the water-soluble humins preferably be used in the polymerizable composition of the present invention are produced by the following steps after the acidic dehydrating of carbohydrates: a first extraction by an organic solvent, more preferred an ether, most preferred diethyl ether (e.g. in a Soxhlet apparatus), followed by a second step of extracting the obtained ether phase with a polar component being non-soluble in the organic solvent, more preferred with an aqueous solvent, most preferred water or water containing an inorganic salt. The two-step extraction yields water-soluble humins which may preferably be used in the polymerizable composition according to the invention.

The water-soluble humins used in the polymerizable composition according to the invention are preferably low molecular weight humins and/or humins with a low polydispersity.

In one aspect, the acidic dehydration of carbohydrates is performed at a temperature between 110°C and 250°C, preferably between 130°C and 220°C, more preferred 140°C to 190°C, most preferred 150°C to 170°C. The above-mentioned review article of de Jong focusses on products other than humins. The article renders clear how to understand the acidic dehydration of carbohydrates to convert the carbohydrates into humins as by-product. The above temperatures are preferred temperature for converting the carbohydrates partially into humins.

In one aspect, the step of extracting comprises the extracting of the dehydration product with an aqueous solvent, preferably water. Alternatively, the step of extracting comprises a first step of extracting the dehydration product with an organic solvent, preferably an ether, more preferred diethyl ether, and thereby obtaining the water soluble humins in an organic phase, and a second step of extracting the water-soluble humins from the organic phase with an aqueous solvent, preferably water, and thereby obtaining the water-soluble humins in the aqueous solvent.

The way of obtaining water-soluble humins according to the above aspect enable obtaining water-soluble humins beneficial for being used in the polymerizable composition according to the invention comprising the difunctional cross-linker together with the monomeric constituents FA and water-soluble humins as well as the acidic polymerization initiator. The obtained water-soluble humins have a low molecular weight and/or a narrow polydispersity.

In one aspect, the water-soluble humins have a molecular weight from 50 g/mol to 1500 g/mol, preferably 70 g/mol to 1000 g/mol, more preferred 90 g/mol to 700 g/mol, and/or wherein the water-soluble humins have a polydispersity (or designated as dispersity) of 1.02 to 3, preferably 1.05 to 2.8, more preferred 1.1 to 1.6. The most preferred water-soluble humins for the impregnation exhibit a polydispersity of about 1.2. The method of obtaining the water-soluble humins results in low molecular weight humins with a narrow polydispersity.

The molecular weight and the polydispersity of humins is measured throughout the present application by GPC-UV using THF as eluent and polystyrenes as standards.

Diligent work on the humins showed that it was possible to fractionate the humins based on solubility properties, to obtain water-soluble fractions with significantly lower average molecular weights and lower dispersity. The transition to the fractionated water-soluble humins provided a solution to this technical requirement. The fractionated humins also provided additional benefits; the reactivity increased, allowing for the replacement of the strongly acidic para-toluenesulfonic acid with less acidic activators; and the homogeneity of the modification improved, as observed from microscopic assessment of wood samples obtained after the impregnation process. Combining the humins with furfuryl alcohol further increased the reactivity, as shown by significantly decreased weight loss from water leaching.

The dispersity of the humins indicates that the humins are polymeric in nature. However, it might be that the water-soluble humins comprise small molecules and also monomeric constituents. The way of obtaining the humins enable the provision of water soluble-humins used in the polymerizable composition according to the invention. It might be that other techniques of fractionating the humins result in the provision of water-soluble humins.

As for a comparison, non-fractionated humins may have a molecular weight *M*_{w} = 4650 g/mol and a dispersity *Ð* = 18.

As for a further essential component, the polymerizable composition of the invention comprises an acidic polymerization initiator. As mentioned above, the polymerizable composition comprises an initiator for initiating the polymerization reaction. When an organic acid initiator is mixed with furfuryl alcohol and water (water being a carrier) the solution becomes very reactive which may cause the furfuryl alcohol and water-soluble humin to polymerize.

In one aspect, the acidic polymerization initiator is an organic or inorganic acidic polymerization initiator, preferably an inorganic Lewis acid selected from the group consisting of aluminium trichloride, aluminium tribromide, aluminium triiodine, boron trichloride, boron tribromide, boron triiodine, zinc dichloride, zinc dibromide, zinc diiodine, iron halide, such as ferrous chloride or ferric chloride, chromium trichloride, chromium tribromide, chromium triiodine, and combinations thereof; or preferably an organic acid selected from the group consisting of maleic anhydride, phthalic anhydride, phthalic acid, formic acid, maleic acid, malic acid, malonic acid, phthalic acid, furoic acid, benzoic acid, furan-dicarboxylic acid, citric acid, salicylic acid, 2-furoic acid, tartaric acid, oxalic acid, levulinic acid and combinations thereof, wherein maleic anhydride, phthalic anhydride or oxalic acid are most preferred. In the framework of the present application, it is understood that the anhydride or the respective acid can be equally used since the anhydride forms the acid during the process. Therefore, there is no difference in using maleic anhydride or maleic acid. Organic initiators are more preferred than inorganic initiators.

It was surprisingly found that the use of the difunctional cross-linker had an impact on the initiator. While state-of-the-art compositions usually make use of strong acids like para-toluenesulfonic acid, the polymerizable composition according to the present invention may use weaker acids.

Maleic anhydride is added to the solution for serving as the most preferred initiator in the polymerizable composition. Maleic anhydride is a well-known initiator having great initiating properties and wood affinity and is additionally more environmentally friendly than other initiators known from prior art such as phthalic anhydride.

In the state of the art, maleic anhydride was used in the function of activator and the initiator. It was surprisingly found that the difunctional cross-linker besides the polymerization initiator is beneficial in the impregnation process of wood.

Even further development and optimization of the polymerizable composition using the water-soluble fractionated humins focussed on the FA:humins ratio, i.e. the ratio of the monomeric constituents. The results confirmed treatment formulations suitable for application in pilot testing. Compared to other humin fractions used in combination with FA in impregnation methods, the water-soluble humins used together with FA required adaptations of the ratio of FA:humins in order to further improve the polymerizable composition.

Thus, in one aspect, the ratio of furfuryl alcohol to water-soluble humins (FA:humins) is 16:1 to 1:10, preferably 5:1 to 1:3, more preferred 4:1 to 1:2, most preferred 3:1 to 1:1. Exemplary ratios are also 5:1 to 1:1. In the framework of the present application, ratios are weight ratios unless specified otherwise.

Generally, it was confirmed that a formulation combining FA with water-soluble humins and an activator system based on the applicant's furfurylation formulation with a moderate concentration of difunctional cross-linker, in particular glyoxal, added provided the favorable results. To provide maximized impact, the goal would be to replace as much FA as possible in the formulations, and thus equal ratio combination formulations with FA and water-soluble humins were a basis for good results when combined with the difunctional cross-linker.

In one aspect, the polymerizable composition comprises, based on the total wt.% of the polymerizable composition:
- furfuryl alcohol in the range from 6 wt.% to 80 wt.%, preferably 10 wt.% to 50 wt.%, more preferred 15 wt.% to 40 wt.%;
- water-soluble humins in the range from 4 wt.% to 60 wt.%, preferably 10 wt.% to 30 wt.%, more preferred 15 wt.% to 40 wt.%;
- a difunctional cross-linker in the range from 0.5 wt.% to 15 wt.%, preferably 2 wt.% to 10 wt.%; more preferred 4 wt.% to 8 wt.%;
- an acidic polymerization initiator being present in the polymerizable composition in a sufficient amount;
- the rest being a carrier.

The polymerizable composition may further optionally comprise a catalyst, and/or a stabilizer, wherein as disclosed herein a co-solvent together with water as the carrier may be used, wherein the co-solvent may have the function of the stabilizer.

In one aspect, the carrier may be water or an aqueous solution. In an alternative, the carrier is an aqueous solution comprising a co-solvent.

A composition according to this aspect is beneficial especially in view of the properties imparted to the impregnated wood.

As for the understanding of the weight percentages, it is of course immediately clear that the polymerizable composition consists of 100 wt.% of constituents. It is thus clear that the polymerizable composition may not comprise 80 wt.% of furfuryl alcohol and 60 wt.% of water-soluble humins, although the polymerizable composition may comprise 64 wt.% of furfuryl alcohol or 60 wt.% of water-soluble humins. As described above, it is intended to substitute the furfuryl alcohol by water-soluble humins, whereupon however, the practical application may determine the beneficial ratio, and thus also the weight percentages, of the polymerizable constituents of the polymerizable composition.

The term "in a sufficient amount" depends on the pKₐ value of the used acid. The specification as a whole teaches how to find the amount being sufficient. Exemplarily in one aspect, the amount and kind of the acidic polymerization initiator is as follows: The acidic polymerization initiator is present in the polymerizable composition in an amount of 0.1 wt.% to 6 wt.%; or being present in an amount such that the pH is above 3 and lower than 7; preferably between 3.2 and 5, more preferred between 3.5 and 3.9. In practice, the polymerizable composition comprises the acidic polymerization initiator, as the most preferred maleic acid, phthalic acid or oxalic acid, and a carboxylic acid as a buffer.

A too acidic polymerizable solution, such as a solution having a pH of less than 3, will polymerize rapidly leading to phase separation and hence destroy the solution as such a reaction cannot be reversed. On the other hand, a too basic polymerizable solution, such as a solution having a pH above 5, would delay or hinder the polymerization reaction of the polymerizable solution during use, hence failing to provide a required reactivity and the targeted properties of the final impregnated product. It is therefore important to provide a polymerizable solution wherein the pH of the initial solution can be controlled to a pH-value within the range from 3 to 5 which is not considered as too acidic or too basic. Due to the acidic properties of the condensate in the polymerizable solution the amount of added water-soluble alkali salt will depend on the acidity thereof and of the buffer range and buffer capacity of added acids.

The water-soluble alkali salt may advantageously be chosen from at least one of a metal hydroxide salt, metal bicarbonate salt and metal carbonate salt as for all practical purposes these only add cations and Off to the polymerizable solution thereby primarily affecting the pH of the polymerizable solution. Preferably the water-soluble alkali salt is sodium carbonate (Na₂CO₃) being environmentally friendly, highly available and cheap.

The polymerizable composition is typically used together with a carrier in the method of impregnating wood. As for the preferred carrier, water is used. The use of water ensures compatibility with environmental issues. It is thus intended to use as much water as possible compared to the water-miscible organic solvent. The latter may, however, beneficially work as a co-solvent having a beneficial technical effect on the stability of the polymerizable composition. The polymerizable composition of the present invention may include co-solvents as disclosed in WO 2004/011216. Such co-solvents can be methanol, ethanol, acetone or other volatile solvents. These co-solvents are both good solvents for furfuryl alcohol / water-soluble humins and good swelling agents for wood. When they are removed from the wood after impregnation thereof, i.e. before curing, the reactivity of the solution increases (pH is reduced) as the co-solvent is evaporated from the wood.

As mentioned above, the polymerizable composition comprises an initiator for initiating the polymerization reaction. When an organic acid initiator is mixed with furfuryl alcohol and water, the polymerizable composition becomes very reactive which may cause the furfuryl alcohol and humins to polymerize. Hence, a stabilizer may be needed to provide a stable solution that is suitable for storing or at least impregnation prior to polymerizing, which is the basis of WO 02/060660.

The first useful stabilizers discovered were borax and sodium salts of lignosulfonic acids. However, sodium salts of lignosulphonic acids show low solubility, are expensive, hard to work with and are thus less preferred stabilizers.

Borax can be used to form a buffer and is also a biocide adding protection against biological degradation to the final cured product. However, borax being a biocide, is undesirable for environmental reasons as borax is easily washed out from the final impregnated material and deposited in the environment.

Effort was made to make stable polymerizable compositions without the use of the stabilizers mentioned above. Such stabile, polymerizable compositions should remain within a pH range during storage as too acidic polymerizable compositions will polymerize rapidly leading to phase separation and hence destroy the solution as such a reaction cannot be reversed. On the other hand, a too basic polymerizable composition would delay or hinder the polymerization reaction of the polymerizable composition during use, hence failing to provide a required reactivity and the targeted properties of the final impregnated product. Other known stable polymerizable compositions include a combination of carboxylic acids and carboxylic anhydrides.

One of the methods providing such stable polymerizable composition includes using stabilizing co-solvents as disclosed in WO 2004/011216. Such co-solvents can be methanol, ethanol, acetone or other volatile solvents. These co-solvents are both good solvents for furfuryl alcohol / humins and good swelling agents for wood. The co-solvents dilute the acid concentration during storage and impregnation, thereby prolonging the storage life of the polymerizable compositions. When they are removed from the wood after impregnation thereof, i.e. before curing, the reactivity of the solution increases (pH is reduced) as the co-solvent is evaporated from the wood. An effective co-solvent removal step is preferably added to the method according to the invention. This removal step is preferably a vacuum drying process, most preferred with a system for recovery of the co-solvent, so that the co-solvent can be re-used. By the use of such stabilizing co-solvents, no further stabilizers are needed, and the initiator : (furfuryl alcohol + humin) ratio can be reduced. This favorably leads to lower amounts of leachable substances in the final impregnated wood product. Further, experiments show that stabilizing co-solvents maintained the pH in the polymerizable composition until after the wood was impregnated. Then the pH decreased (became more acidic) which facilitated curing. However, the use of such co-solvents is more expensive and imposes more requirements on safety and process equipment than the use of water and is thus less favorable. These co-solvents are also considered to be volatile, challenging to recover and flammable. Use of such flammable co-solvent in closed off volumes, typical for process equipment, may lead to formation of explosive atmospheres if containing oxidizers as oxygen in air.

The polymerizable composition can be used in impregnation processes in that the polymerizable composition is added to a carrier. The carrier is preferably water for environmental reasons. For reasons of stability of the polymerizable composition the polymerizable composition and/or the carrier comprises a stabilizer, preferably being a co-solvent.

The polymerizable composition may also contain one or more diluents. The diluent is especially suitable when the viscosity of the composition is to be lowered, so that the processibility is facilitated. When a diluent is used, such a diluent is preferably water, ketones, dimethyl sulphoxide, dimethyl formamide and combinations thereof. The diluent can generally be present in a variety of amounts, depending on the eventual use. Typical amounts of diluents range from 0 to 30%wt, based on the combined amount of furfuryl alcohol and humins.

The polymerizable composition may also contain constituents resulting from the fractionated extraction of the water soluble humins. When preparing water-soluble humins used in the polymerizable compositions according to the invention, levulinate based compounds, in particular alkyl levulinate esters and especially methyl levulinate (ML), are formed. Accordingly, it may be that there are such compounds in the polymerizable composition.

Preferred polymerizable compositions may comprise, based on the total wt.% of the polymerizable composition:
- furfuryl alcohol in the range from 6 wt.% to 80 wt.%, preferably 20 wt.% to 60 wt.%, more preferred 25 wt.% to 50 wt.%;
- water soluble humins in the range from 4 wt.% to 60 wt.%, preferably 10 wt.% to 40 wt.%, more preferred 25 wt.% to 30 wt.%;
- a difunctional cross-linker in the range from 0.5 wt.% to 15 wt.%, preferably 2 wt.% to 10 wt.%; more preferred 4 wt.% to 8 wt.%;
- an acidic polymerization initiator in an amount of 1 wt.% to 6 wt.%;
- a carrier in the range of 10 wt.% to 90 wt.%; and
- a co-solvent in the range of 0 wt.% to 10 wt.%.

Exemplary polymerizable compositions may comprise the following constituents in the following ranges, based on the total wt.% of the polymerizable composition:
- furfuryl alcohol in the range from 10 wt.% to 25 wt.%, preferably 15 wt.% to 20 wt.%;
- water soluble humins in the range from 10 wt.% to 25 wt.%, preferably 15 wt.% to 20 wt.%;
- a difunctional cross-linker in the range from 1 wt.% to 12 wt.%, preferably 2 wt.% to 8 wt.%;
- an acidic polymerization initiator in an amount of 1 wt.% to 6 wt.%; preferably 2 wt.% to 5 wt.%;
- a carrier in the range of 32 wt.% to 72 wt.%; and
- a co-solvent in the range of 0 wt.% to 10 wt.%.

The present inventors have further solved the above-mentioned need by providing in a **second** aspect a method of modifying wood according to claim 11, wherein the method comprises the steps of:
- providing the polymerizable composition according to the first aspect of the invention;
- contacting wood with the polymerizable composition to obtain impregnated wood; and
- subsequently heating the impregnated wood.

When contacting wood with the polymerizable composition, the wood is impregnated, i.e. the polymerizable composition penetrates into the wood or the polymerizable composition is immersed into the wood fibres.

A conventional polymerization process for obtaining an impregnated wood product is known from inter alia EP 2435223 Al and EP 4496829. The process involves inter alia the use of a treatment chamber, i.e. a drying and curing chamber, for combined drying and curing. The process includes applying a polymerizable composition to the material to be impregnated, e.g. wood, before introducing the wood to the apparatus (or verse vice, i.e. introducing wood and then introducing the polymerizable composition). The apparatus typically includes a drain port that permits so-called "bottom condensate", which is realized by compounds from the polymerizable composition and compounds from the wood, such as water, furfuryl alcohol, organic compounds, polymers and resins, to be drawn out of the apparatus during the heating phase and, to a lesser extent, the subsequent curing phase. Further, the principal mechanism for removal of water and other chemicals, so-called "top condensate", is via a condenser that taps into the drying and curing chamber towards its upper surface. Such top condensate is mainly realized by recondensing vaporized water, furfuryl alcohol and volatile organic compounds (VOCs) originating from the polymerizable composition and wood. The top condensate is then routed to a condensate tank for re-use. The bottom condensate is routed to a separator tank that separates the re-useable parts of the condensate from unusable, heavy density polymer.

Thereafter, the re-useable parts are transferred to the condensate tank for re-use. However, re-use of such condensate, i.e. the top condensate and the re-usable parts of the bottom condensate, as a carrier for providing a stable polymerizable compositon suitable for obtaining a final impregnated wood product is challenging. This is partly due to resinified and oligomerized components in the condensate originating from the polymerizable composition becoming increasingly nonpolar with increasing degree of polymerization during curing. As such components are soluble in furfuryl alcohol and humins, the presence of these components in the condensate when used as carrier will decrease the solubility of the organic furfuryl alcohol/humin phase in water. This decreased solubility manifests as increased cloud point temperatures which is undesirable as the cloud point temperature of the initial polymerizable composition must be below the storage temperature of the solution to avoid phase separation. The condensate also has low pH due to acidic by-products formed during the polymerization reaction. The low pH accelerates the polymerization reaction hence shortening the storage life of the polymerizable composition.
In one aspect, the method further comprise the steps of .
- introducing the wood into a treatment chamber; and
- applying vacuum to the treatment chamber.

The method may thus further comprise a step of applying vacuum. The primary purpose/effect of the vacuum step is to remove air (gas) in the wood, providing ready space for the filling of the wood structure with liquid during impregnation. That is, preventing gas bubbles from becoming trapped in the wood and blocking impregnation with the liquid. The step of applying a vacuum may be applied before contacting the wood with the polymerizable composition. During the step of contacting the wood with the polymerizable composition, the pressure may be set to ambient pressure or the pressure may be increased. In one aspect, the method comprises the steps of:
- providing the polymerizable composition according to the first aspect of the invention;
- introducing wood into a treatment chamber;
- applying vacuum to the treatment chamber;
- contacting wood with the polymerizable composition according to the first aspect of the invention to obtain impregnated wood; and
- subsequently heating the impregnated wood.

The step of introducing the wood into a treatment chamber enables a subsequent step of applying vacuum. The term "applying vacuum" is understood as exerting reduced pressure. The application of vacuum is performed in order to reduce water/moisture in the wood. When the wood is in contact with the polymerizable composition, the step of applying vacuum is preferably stopped. As will be discussed below, in one aspect, the step of contacting wood with the polymerizable composition may be performed under increased pressure.

In one aspect, the method comprises the subsequent steps of:
- introducing the wood in the carrier in the treatment chamber;
- adding into the treatment chamber a first part of the polymerizable composition which first part comprises furfuryl alcohol, the water-soluble humins and optionally further components of the polymerizable composition but except for the acidic polymerization initiator,
- adding the acidic polymerization initiator as the second part of the polymerizable composition into the treatment chamber.

In one aspect, the method comprises the step of removing excess of polymerizable composition from the wood. In practice, the wood is removed from the treatment chamber, excess polymerizable composition is removed from the surface of the wood, e.g. by allowing the polymerizable composition to drip off the wood, and the wood is placed in a heating chamber where the atmospheric pressure may be reduced.

The removed polymerizable composition can be used for a further impregnation of wood.

The method may further include stirring or mixing during and/or between each step.

It is preferred that the step of heating is performed after the impregnated wood is removed from the polymerization composition, i.e. wood is not immersed in the polymerizable composition.

In one aspect, the heating is performed by increasing the temperature to 90°C to 160°C, preferably 95°C to 140°C, more preferred 100°C to 130°C; and/or wherein the heating is performed for 3 h to 72 h, preferably 6 h to 48 h, more preferred 12 h to 26 h.

A beneficial effect associated with this invention refers to the temperature during heating. Since the difunctional cross-linker increases the reactivity, the temperature may be reduced compared to a heating where the polymerizable composition does not comprise a difunctional cross-linker. Thus, when making use of the difunctional cross-linker in line with the present invention, it was found beneficial that the step of heating comprises applying a temperature above 120°C and a temperature of less than 160°C.

In one aspect, the heating may be performed in two stages, whereby in a first stage a lower temperature is applied than in a second stage, whereby more preferred in the first stage a temperature of 90°C to 120°C is applied and in the second stage a temperature of more than 120°C to 160°C or less is applied. According to this preferred aspect, the first stage and/or the second stage have a duration of 6 h to 30 h.

It is emphasized that although the heating characteristics are associated with a beneficial technical effect, a significant benefit is achieved by the use of the difuntional cross-linker having an impact on the final impregnated wood product.

By the step of heating, the curing of the polymerizable composition accomplishes.

In one aspect, the step of contacting is performed under pressure. The application of pressure is preferably performed in the treatment chamber. In one aspect, the pressure during the step of contacting amounts to 1.2 bar to 10 bar, preferably 2 bar to 8, more preferred 3 bar to 6 bar. In the framework of the present application, the pressure is meant to be the absolute pressure.

In one aspect, the method further comprises the step of increasing the pressure inside the treatment chamber, preferably wherein the method further comprises the step of increasing the pressure inside the treatment chamber at least partly concurrently with the step of heating or at least partly concurrently with the steps of impregnating and heating.

The present inventors have further solved the above-mentioned need by providing in a **third** aspect a use of a polymerizable composition according to the first aspect of the invention for modifying wood or for impregnating wood.

Features being solely disclosed in connection with the first aspect of the invention are deemed to be disclosed in connection with the second or third aspect of the invention and vice versa.

### BRIEF DESCRIPTION OF THE DRAWING

Figure 1: Results of wood modifications with FA(furfuryl alcohol)-humins mixtures. Weight percent gained (WPG) indicates modification level, equilibrium moisture content (EMC) indicates moisture uptake, and weight loss (WL) indicates durability of the treatment.
Figure 2: Results of wood modifications with activator system variations. Weight percent gained (WPG) indicates modification level, equilibrium moisture content (EMC) indicates moisture uptake, and weight loss (WL) indicates durability of the treatment.
Figure 3: Results of scaled-up wood modifications with activator system variations. Weight percent gained (WPG) indicates modification level, equilibrium moisture content (EMC) indicates moisture uptake, and weight loss (WL) indicates durability of the treatment.

The following examples refer to principles of the production of water-soluble humins, to a state of the art methods of impregnation, and further to effects associated with features (either preferred features or essential features) according to the invention.

### Example 1: Method of producing humins starting from humins obtained from a dehydrated product of a carbohydrate

A detailed disclosure on water-soluble fractions of humins are found in Sangregorio, A. et al., "Humin based resin for wood modification and property improvements", Green Chemistry, 2020, vol 22, pp. 2786-2798.

An exemplary method of obtaining the water-soluble fraction of humins comprises the following steps:
- Treating raw humins in an oil bath and mixed at 80°C for 20 minutes;
- Adding demineralized water, pre-heated to 80°C;
- Stirring humins/water mixture ratio 50/50% wt.;
- After 40 minutes take the mixture out of the oil bath and allowed to cool;
- When the mixture has reached room temperature the mixture separates into two phases a solid residue and a liquid phase wherein the liquid phase composed of 65 wt.% and 35 wt.% of initial humins respectively.
- Decantation for two hours at room temperature in two phases (solid and liquid phase).

### Example 2:

This example shows a typical impregnation technique on a lab scale as performed in the state of the art (here as performed in Sangregorio, A. et al., "Humin based resin for wood modification and property improvements", Green Chemistry, 2020, vol 22, pp. 2786-2798). For wood impregnation on lab scale the liquid fraction of humins was employed (with a humins/water ratio of 45/55 wt.%).

An FA based mixture was prepared to compare with the liquid fraction of humins. FA was mixed with 2 wt% of maleic anhydride (MA) for 15 min at 80 °C. Demineralized water was added to the mixture in a FA/MA/H₂O ratio of 49/1/50 wt% in order to have a similar amount of water compared to the liquid fraction of humins as well as an expected weight percent gain (WPG) of around 30%, i.e. the lowest value known from the literature to extend the expected durability of wood samples in ground and marine contact compared to untreated wood and therefore suggested as the WPG to use commercially.

The FA mixture was stirred for 5 minutes at 80 °C to obtain a homogeneous liquid phase. Wood veneers (2 mm thick) were dried under vacuum at 60 °C for one hour before impregnation. The vacuum pressure was about 2 mbar. Before vacuum impregnation, the veneers were completely covered either with the liquid fraction of humins or the FA mixture. In each case, the quantity of impregnating solution was set to obtain, after complete treatment, a weight percent gain (WPG) of about 30 wt% compared to the untreated wood. Samples with a lower WPG were attempted (i.e. with a lower quantity of impregnating solution) but resulted in non-homogeneous samples. The samples were placed under vacuum at 60 °C (vacuum pressure ~2 millibar) for one hour to promote impregnation. The samples were then taken out of the solution, the surface was gently dried with a cloth and the samples were cured in an oven for 1 hour at 150 °C. The impregnated samples were compared with wood veneers which had been subjected to the same treatments as the impregnated samples, i.e. dried in a vacuum oven for one hour at 60 °C, impregnated with pure water and then heated for one more hour at 150 °C. For humin treated wood, the final WPG was 30 ± 2%.

### Example 3 to 17:

The below Table 1 shows the modifications in the polymerizable compositions, principles of the activator systems, and the applied curing conditions. The main components of the activator systems are initiators that catalyse or trigger polymerisation reactions. FA (furfuryl alcohol) and the water-soluble fraction of humins (WSF) are used as shown in the below Table 1. The water-soluble humins represent bioproducts (byproducts?) which may distinguish from batch to batch. The water-soluble humins taken for Examples 3 to 7 may distinguish from those of Examples 8 to 13 and 14 to 17 because of being taken from different batches. As a consequence, the respective Examples may exhibit deviating results. The Kebony activator system comprises the initiator comprising the acid, i.e. in the Examples maleic anhydride, and a buffering compound, i.e. in the Examples citric acid, and a water-soluble alkali salt, i.e. in the Examples anhydrous sodium carbonate. The acid and the buffering agent are used in equal weights.

**Tab. 1: Summary of humins samples and treatment experiments performed**

| **Sample name** | **Modification solution** | **Activator system** | **Curing conditions** |
|---|---|---|---|
| Examples 3 to 7 | 3. FA:WSF (1:1, *37 wt.*%) | 3. Kebony activator system | 24 h at 103 °C |
| | 4. FA:WSF (1:1, 33 *wt.*%) | | + 24 h at 150 °C |
| | 5. FA:WSF (1:2, 39 *wt.*%) | 4. Kebony activator system + glyoxal (10 *wt*.%) | |
| | 6. FA:WSF (2:1, 47 *wt*.%) | | |
| | 7. FA:WSF (1:1, *37 wt*.%) | | |
| | | 5. Kebony activator system | |
| | | 6. Kebony activator system | |
| | | 7. Kebony activator system w/ maleic anhydride 1,7 *wt*.% (2x conc.) | |
| Examples 8 to 13 | 8. WSF (30 *wt.%)* | 8-9. Kebony activator system w/ glyoxal 6 *wt.*% | 8-11. 24 h at 103 °C |
| | 9. FA:WSF (1:1, *37 wt*.%) | | + 24 h at 140 °C |
| | 10. FA:WSF (1:1, *37 wt*.%) | | 12-13. 24 h at 103 °C |
| | 11. FA:WSF (1:1, *37 wt*.%) | 10. Kebony activator system w/ glyoxal 3 *wt*.% | + 24 h at 120 °C |
| | 12. Kebony furfurylation (FA 37 *wt.*%) | | |
| | 13. Kebony furfurylation (FA 37 *wt*.%) | 11. Kebony activator system w/ glyoxal 1 *wt*.% | |
| | | 12. Kebony activator system w/ glyoxal 6 *wt.*% | |
| | | 13. Kebony activator system | |
| Examples 14 to 17 | 14. FA:WSF (1:1, *37 wt*.%) | 14. Kebony activator system w/ glyoxal 6 *wt.*% | 14-15. 24 h at 103 °C |
| | 15. FA:WSF (1:1, *37 wt*.%) | | + 24 h at 140 °C |
| | 16. Kebony furfurylation (FA 37 *wt*.%) | | 16-17. 24 h + 24 h at 103 °C |
| | | 15. Kebony activator system w/ glyoxal 3 *wt*.% | |
| | 17. Kebony furfurylation (FA 37 *wt*.%) | | |
| | | 16. Kebony activator system w/ glyoxal 6 *wt*.% | |
| | | 17. Kebony activator system | |

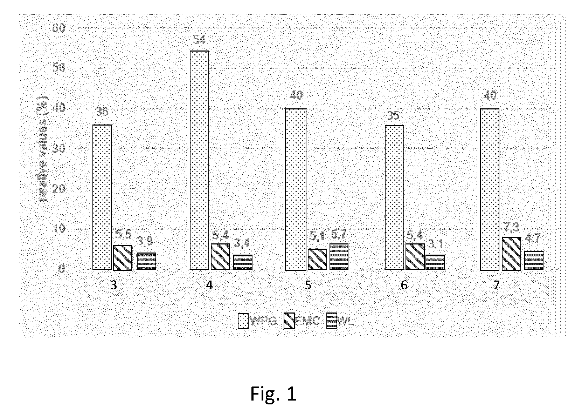

As shown in Figure 1, improved reactivity and curing was achieved with ratios of humins to FA higher in FA proportions. Figure 1 clearly shows that the addition of the difunctional cross-linker glyoxal resulted in significantly higher weight gain. The weight percent gained (WPG) indicates modification level of treated wood. The equilibrium moisture content (EMC) determined after acclimatization in controlled conditions-to determine hygroscopic properties

It was found that a formulation combining FA with WSF humins and an activator system based on the Kebony furfurylation formulation with a moderate concentration of glyoxal added provided the best results.

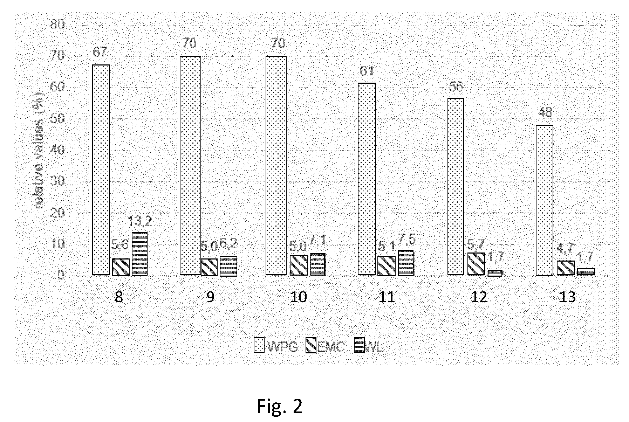

As shown in Figure 2, increasing concentrations of glyoxal in the activator system indicated improved curing and weight gain for the FA-humins wood modifications. The effect of the glyoxal concentration did however appear to be less significant towards the higher concentrations investigated.

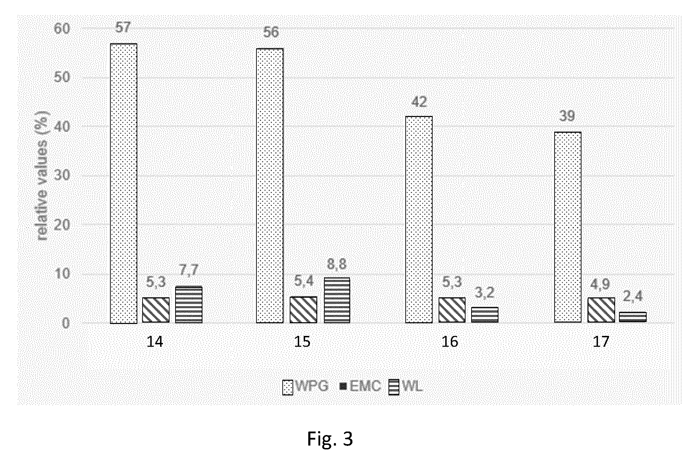

In the scaled-up wood modifications, the humins-based formulations resulted in higher weight gains, but correspondingly higher weight losses from leaching compared to the Kebony furfurylation references (Fig. 3). Although the sample group differences were statistically significant, considering the technical product requirements, the results were within acceptable ranges. Mechanical testing on the scaled-up samples further indicated that these humins-based wood modifications had comparable effects on the physical and mechanical properties as Kebony furfurylation. While chromatographic quantification of remaining unreacted furfuryl alcohol confirmed lower levels of residual starting chemical in samples modified with humins formulations, which is positive in terms of expected toxicity of the final products.

## Claims

1. A polymerizable composition comprising a furfuryl alcohol, an acidic polymerization initiator, difunctional cross-linker, and water-soluble humins.

2. The polymerizable composition according to claims 1, wherein the water-soluble humins are produced by the following steps:
• acidic dehydrating of carbohydrates, preferably a lignocellulosic material or a sugar, and thereby obtaining a dehydration product; and
• extracting the water-soluble humins from the dehydration product, and thereby obtaining the water-soluble humins.

3. The polymerizable composition according to claim 2, wherein the acidic dehydration of carbohydrates is performed at a temperature between 130°C and 220°C, preferably 140°C to 190°C, more preferred 150°C to 170°C.

4. The polymerizable composition according to claim 2 or claim 3, wherein the step of extracting comprises the extracting of the dehydration product with an aqueous solvent, preferably water, or
wherein the step of extracting comprises a first step of extracting the dehydration product with an organic solvent, preferably an ether, more preferred diethyl ether, and thereby obtaining the water-soluble humins in an organic phase, and a second step of extracting the water-soluble humins from the organic phase with an aqueous solvent, preferably water, and thereby obtaining the water-soluble humins in the aqueous solvent.

5. The polymerizable composition according to any one of claims 1 to 4, wherein the water-soluble humins have a molecular weight from 50 g/mol to 1500 g/mol, preferably 70 g/mol to 1000 g/mol, more preferred 90 g/mol to 700 g/mol, and/or wherein the water-soluble humins have a polydispersity of 1.02 to 3, preferably 1.05 to 2.8, more preferred 1.1 to 1.6.

6. The polymerizable composition according to any one of claims 1 to 5, wherein the difunctional cross-linker is a dialdehyde, preferably an alkanedial, more preferred a C2- to C6-alkanedial, in particular glyoxal.

7. The polymerizable composition according to any one of claims 1 to 6, wherein the acidic polymerization initiator is an organic or inorganic acidic polymerization initiator, preferably an inorganic Lewis acid; or preferably an organic acid selected from the group consisting of maleic anhydride, phthalic anhydride, formic acid, maleic acid, malic acid, malonic acid, phthalic acid, furoic acid, benzoic acid, furan-dicarboxylic acid, citric acid, salicylic acid, 2-furoic acid, tartaric acid, oxalic acid, levulinic acid and combinations thereof, wherein maleic anhydride, phthalic anhydride or oxalic acid are most preferred.

8. The polymerizable composition according to any one of claims 1 to 7, wherein the ratio of furfuryl alcohol to water-soluble humins (FA:humins) is 16:1 to 1:10, preferably 5:1 to 1:3, more preferred 4:1 to 1:2, most preferred 3:1 to 1:1.

9. The polymerizable composition according to any one of claims 1 to 8, wherein the polymerizable composition comprises, based on the total wt.% of the polymerizable composition:
• furfuryl alcohol in the range from 6 wt.% to 80 wt.%, preferably 10 wt.% to 50 wt.%, more preferred 15 wt.% to 40 wt.%;
• water soluble humins in the range from 4 wt.% to 60 wt.%, preferably 10 wt.% to 30 wt.%, more preferred 15 wt.% to 40 wt.%;
• a difunctional cross-linker in the range from 0.5 wt.% to 15 wt.%, preferably 2 wt.% to 10 wt.%; more preferred 4 wt.% to 8 wt.%;
• an acidic polymerization initiator being present in the polymerizable composition in a sufficient amount;
• the rest being a carrier.

10. The polymerizable composition according to claim 9, wherein the acidic polymerization initiator is present in the polymerizable composition in an amount of 1 wt.% to 6 wt.%; or being present in an amount such that the pH is above 3 and lower than 7; preferably between 3.2 and 5.5, more preferred between 3.5 and 3.9.

11. A method of modifying wood, wherein the method comprises the steps of:
• providing the polymerizable composition according to any one of claims 1 to claim 10;
• contacting wood with the polymerizable composition according to any one of claims 1 to claim 10 in order to obtain impregnated wood; and
• subsequently heating the impregnated wood.

12. The method according to claim 11, wherein the method further comprise the steps of
• introducing the wood into a treatment chamber; and
• applying vacuum to the treatment chamber.

13. The method according to claim 11 or claim 12, wherein heating is performed by increasing the temperature to 90°C to 160°C, preferably 95°C to 140°C, more preferred 100°C to 130°C; and/or wherein the heating is performed for 3 h to 72 h, preferably 6 h to 48 h, more preferred 12 h to 26 h.

14. The method according to any one of claims 11 to 13, wherein the step of contacting is performed under pressure; preferably wherein the pressure inside the treatment chamber amounts to 1.2 bar to 10 bar, preferably 2 bar to 8, more preferred 3 bar to 6 bar.

15. Use of a polymerizable composition according to any one of claims 1 to claim 10 for modifying wood or for impregnating wood.
